# EUROPEAN PATENT SPECIFICATION

(11) **EP 2 610 147 B1**
(45) Date of publication and mention of the grant of the patent: **09.03.2016**
(21) Application number: 12184151.4
(22) Date of filing: 13.09.2012
(51) Int. Cl.: B62D 25/08, B62D 25/10, B60Q 1/04, B62D 49/00

(54) **Tractor**
Traktor
Tracteur

(30) Priority: 28.12.2011 JP 2011289247
(43) Date of publication of application: 03.07.2013
(73) Proprietor: Kubota Corporation, Osaka-shi, Osaka 556-8601 (JP)
(72) Inventor: Shoen, Shigeo, SAKAI-SHI, OSAKA, 590-0823 (JP)
(74) Representative: Intès, Didier Gérard André

(56) References cited:
- DE-A1- 3 216 531
- JP-A- 2004 224 274
- JP-A- 2010 069 925
- US-A- 6 068 675
- US-B1- 6 401 851

## Description

### BACKGROUND OF THE INTENTION

### 1. Field of the Invention

The present invention relates to a tractor that includes a body, an engine room formed in the front region of the body, a headlamp unit, and an engine hood that is supported to the body so as to be capable of being displaced between a closed orientation of covering the engine room from above and an open orientation of exposing the engine room, the engine hood having a top panel, a front panel, and side panels.

### 2. Description of the Related Art

Many tractors include an engine hood that can move up and down about a shaft core that extends in the horizontal direction of the body in the rear portion of the engine hood. Headlamps are also mounted in the front panel that constitutes the engine hood. One known example of such a tractor is disclosed in JP 2010-069925A. With this tractor, the shape of the support structure body for attaching the headlamps to a front end portion of the engine hood tends to be influenced by the shape of the front panel of the engine hood, and is complicated. As a result, the shape of the engine hood also becomes complicated, thus raising the cost of manufacturing. Specifically, a stay structure member is provided in order to support the headlamps to the front end portion of the engine hood, and this stay structure member has a complicated shape due to the end portions and edge portions thereof being notched and bent so as to conform to the shape of the engine hood.

US Patent No. 6068675 discloses a tractor in which the engine hood is constituted from a top panel that swings and a non-swinging front panel that is fixed to the body, and the headlamps are attached to the front panel. In this case as well, the front panel structure is complicated since the headlamps are attached to the front panel.

Both the above named document disclose the preamble of claim 1.

### SUMMARY OF THE INVENTION

In light of the above circumstances, there is demand for a headlamp support structure in a tractor that enables the simple and accurate adjustment of the optical axes of the headlamps.

The present invention is directed to a tractor that includes: a body: an engine room formed in a front region of the body; a headlamp unit; and an engine hood supported on the body so as to be capable of being displaced between a closed orientation of covering the engine room from above and an open orientation of exposing the engine room, the engine hood including a top panel, a front panel, and side panels. A feature of the present invention is that a support unit is disposed in front of the engine room, the support unit having a left perpendicular support column and a right perpendicular support column that are provided upright on the body with a space therebetween in a transverse direction of the body, and a cross beam that connects upper portions of the left perpendicular support column and the right perpendicular support column to each other; the headlamp unit is supported on an upper portion of the support unit; and a light transmitting portion is provided in the front panel, the light transmitting portion being disposed so as to transmit illumination light from the headlamp unit when the engine hood is in the closed orientation.

Since the support unit has a U-shaped structure consisting of left and right perpendicular support columns and the cross beam, the perpendicular support columns can be disposed using the limited amount of space in the engine room, and the cross beam can be disposed at the top of the engine room, which relatively has leeway with respect to space. Since the headlamp unit is attached to the upper portion of the support unit having this stable structure, the optical axes of the headlamp unit can also be reliably positioned. Also, the fixing components such as brackets for attaching the headlamp unit to the support unit can have a simple shape.

Also, in order to transmit illumination light from the headlamp unit when in the closed orientation, light transmitting portions that can transmit illumination light over peripheral regions centered on the optical axes are formed in the front panel of the engine hood. These light transmitting portions need only be able to transmit light, and the simplest mode thereof is aperture portions formed in the front panel. A front panel in which a transparent material is used for only the light transmitting portions is also possible. Furthermore, a mode is possible in which a transparent material such as transparent plastic is fitted in the aperture portions serving as the light transmitting portions in order to prevent infiltration by water and foreign objects. In any of these cases, the structure of the front portion of the engine hood is simplified since there is no need to attach the headlamp unit to the engine hood.

Since the support unit has a U-shaped structure, an accessory that is attached to the body can be disposed between the left and right perpendicular support columns, that is to say, below the cross beam. In other words, even if there is an accessory that is attached to the body, the support unit can be attached to the body while avoiding that accessory, that is to say, so as to cross over that accessory. This contributes to the effective utilization of the engine room. Also, since the support unit crosses over the battery, gaps are formed between the support unit and the battery, which also has the advantage of facilitating the flow of air to the engine since air flowing from the front of the body toward the rear of the body is not obstructed by the support unit or the battery.

Furthermore, when a harness is connected to the headlamp unit in order to supply power to the lights for example, if the headlamp unit is attached to the engine hood, the harness needs to be given extra length in order to accommodate the movement of the headlamp unit that accompanies the opening and closing of the engine hood. However, with the present invention, the headlamp unit is attached to the support unit and does not move up and down along with the engine hood, thus eliminating the need to give the harness extra length.

According to one preferred embodiment of the present invention, a fixing member for fixing an accessory such as a battery is attached to the support unit. This enables the integration of the structure for supporting the headlamp unit and the structure for fixing the accessory such as the battery, thus reducing manufacturing cost, assembly cost, and maintenance cost.

According to another preferred embodiment of the present invention, a locking mechanism that holds the engine hood in the closed orientation is provided in a portion of the frame that is in front of the battery. Accordingly, the engine hood is reliably held in the closed orientation, thus ensuring stable use of the headlamp unit.

### BRIEF DESCRIPTION OF THE DRAWINGS

FIG. 1 is a left side view showing the entirety of a tractor.
FIG. 2 is a plan view showing a front half portion and part of a rear half portion of the tractor.
FIG. 3 is a front view of relevant portions of the tractor.
FIG. 4 is a perspective view showing relevant portions of the front half portion of the tractor, with the engine hood in a detached state.
FIG. 5 is a front view showing relevant portions in the periphery of a support unit.
FIG. 6 is a side view of a longitudinal cross-section showing the engine hood in a closed orientation.
FIG. 7 is a side view of a longitudinal cross-section showing the engine hood in an open orientation.
FIG. 8 is a rear view showing relevant portions of an engine hood support mechanism when the engine hood is in the open orientation.
FIG. 9 is a perspective view showing the periphery of a holding portion of the engine hood.
FIG. 10 is a side view of a longitudinal cross-section showing the periphery of the holding portion of the engine hood.
FIG. 11 is a front view showing a locking mechanism of the engine hood, with a retaining latch in a retaining orientation.
FIG. 12 is a front view showing the locking mechanism of the engine hood, with the retaining latch in a non-retaining orientation.

### DETAILED DESCRIPTION OF PREFERRED EMBODIMENTS

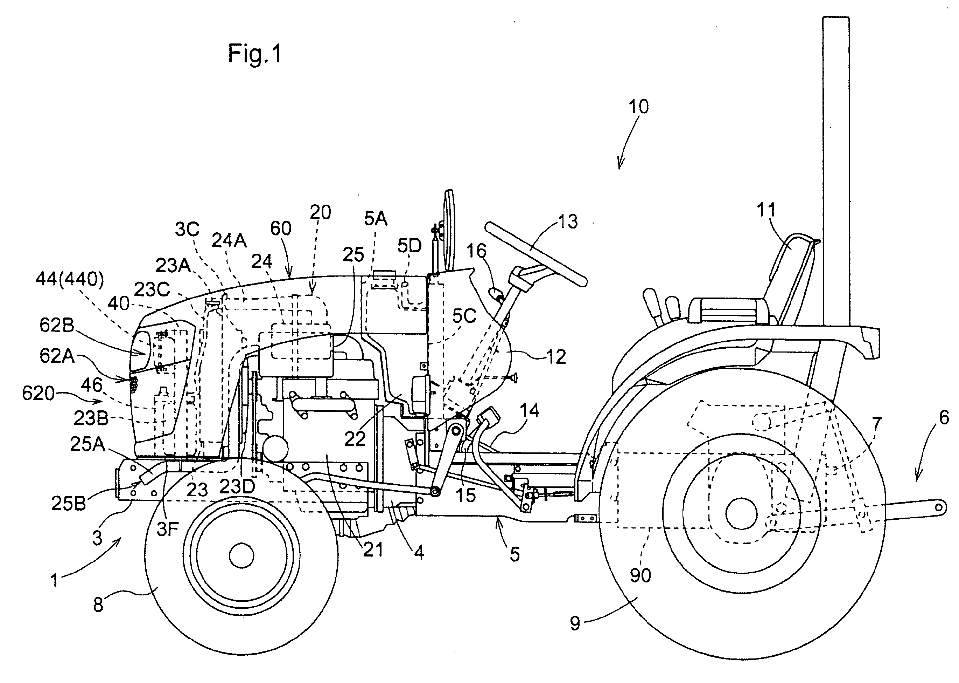

As shown in FIG. 1, a tractor of the present invention includes a body 1 and an engine 21. The body 1 includes a front portion frame 3 that supports the front portion of the engine 21 in an orientation of extending toward the front of the vehicle, a clutch housing 4 that is coupled to the rear portion of the engine 21, an intermediate transmission case 5 that is coupled to the rear portion of the clutch housing 4 so as to extend in the rearward direction of the vehicle, and a transmission case 90 that is coupled to the rear portion of the intermediate transmission case 5.

The tractor also includes a drivable pair of left and right front wheels 8 that support the front portion frame 3, and a drivable pair of left and right rear wheels 9 that support the transmission case 90, and thus is configured having four-wheel drive specifications.

As shown in FIG. 1, an engine room 20 is formed in the front half portion of the body 1, which is constituted by the front portion frame 3, the clutch housing 4, and the front end portion of the intermediate transmission case 5. The engine room 20 is covered from above by an engine hood 60.

Also, a driving portion 10 that can be ridden by a user is provided above a location that is behind the front end portion of the intermediate transmission case 5, which corresponds to the rear half portion of the body.

The rear end portion of the body also includes a coupling device 6 that enables the coupling of a work device (not shown) such as a tillage rotor or a plow, and a PTO shaft 7 that can transmit power to the work device that is coupled to the coupling device 6.

As shown in FIG. 1, the driving portion 10 includes a driver's seat 11, an accelerator pedal 14, an accelerator lever 16, a brake pedal 15 that can slow down the traveling tractor when pressed, and a steering wheel 13 that enables steering of the left and right front wheels 8.

Note that a steering post 12 formed so as to have a hollow interior is disposed in front of the driver's seat 11, and the steering post 12 includes the steering wheel 13 and the accelerator lever 16.

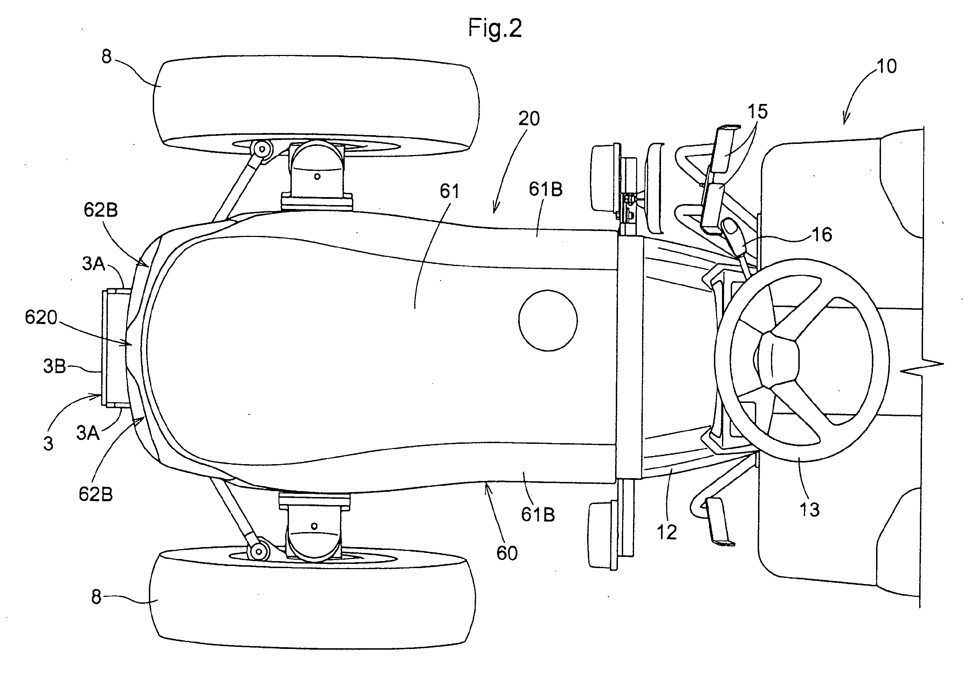

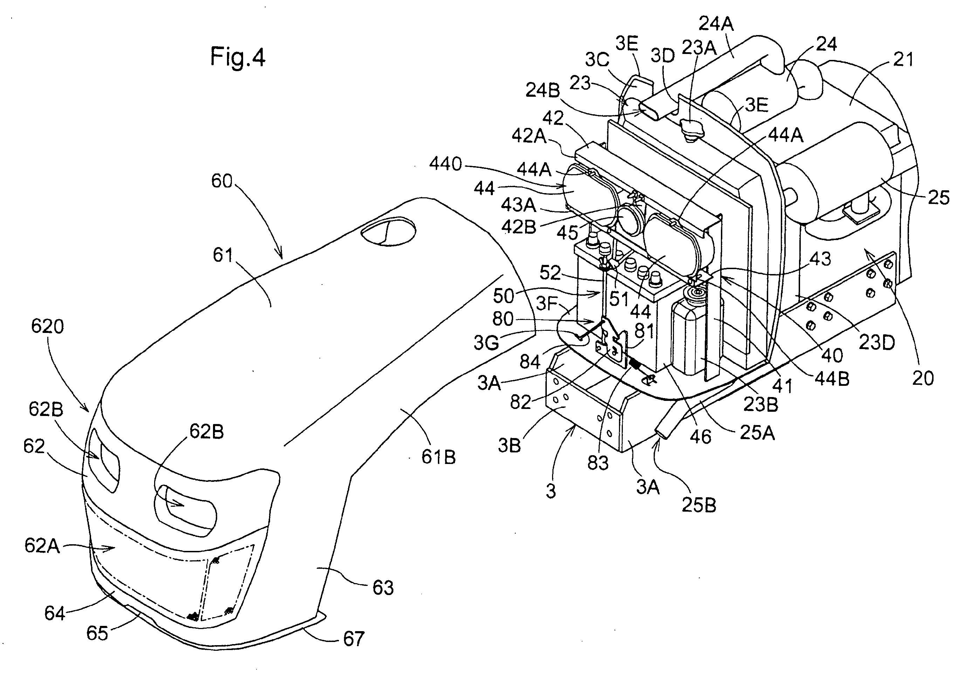

As shown in FIGS. 2 and 4, the front portion frame 3 is formed so as to be U-shaped in a plan view. Specifically, the front portion frame 3 is constituted by a pair of left and right first members 3A that consist of vertically-oriented plates that extend from left and right side portions of the engine 21 toward the front of the vehicle, and a second member 3B that consists of a vertically-oriented plate that is fixed by welding so as to connect the front end portions of the left and right first members 3A.

As shown in FIG. 4, a support plate 3F that consists of a horizontally-oriented plate member is fixed by welding so as to span the left and right first members 3A in the front portion of the front portion frame 3, that is to say, in front of the engine 21.

As shown in FIGS. 1, 6, and 7, a headlamp unit 440 is disposed inside the engine room 20 in the front region thereof, and the engine 21, a fuel tank 22, a radiator 23, an air cleaner 24, and a muffler 25 are disposed inside the engine room 20 behind the headlamp unit 440.

Specifically, as shown in FIGS. 1, 6, and 7, a first partition member 5A that consists of a plate member that partitions the engine 21 from the region behind the engine 21 is provided above the clutch housing 4, that is to say, behind the engine 21, and the fuel tank 22 is provided behind the first partition member 5A. In other words, the engine 21 and the fuel tank 22 are partitioned from each other by the first partition member 5A.

Also, the rear portion of the fuel tank 22 is located inside the steering post 12 of the driving portion 10.

Also, as shown in FIG. 4, the air cleaner 24 is disposed above the engine 21 on one side in the left-right direction of the body. An air intake pipe 24A that extends forward from the air cleaner 24 has a tip portion that has an air intake opening 24B, and the tip portion passes through a notch 3D in a later-described second partition member 3C.

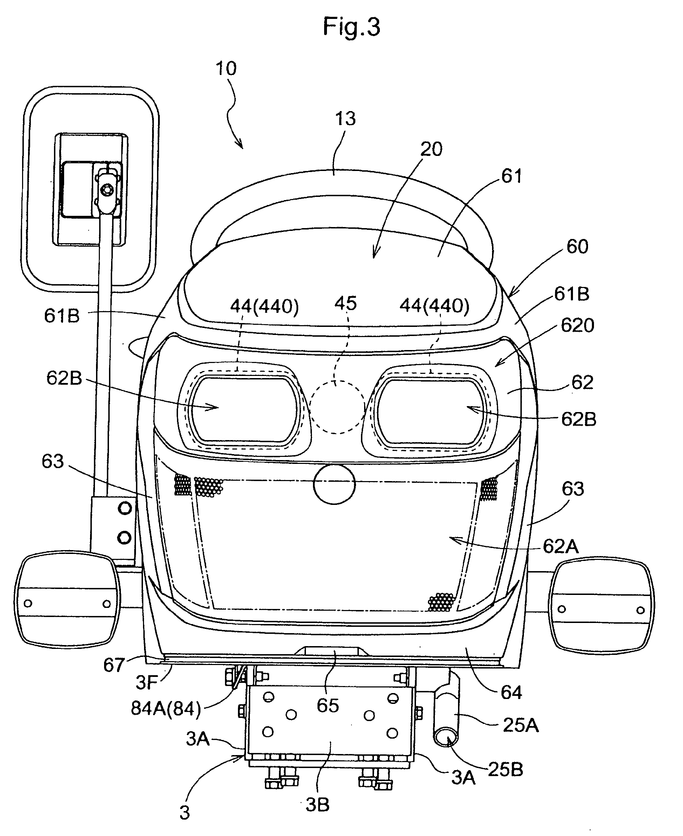

As shown in FIG. 4, the muffler 25 is coupled to the engine 21 and disposed above the engine 21 at a position on the other side in the left-right direction of the body, that is to say, on the side opposite from the air cleaner 24 in the left-right direction of the body. As shown in FIGS. 3 to 7 and 9, an exhaust pipe 25A extending out from the muffler 25 passes between the engine 21 and the region behind the later-described second partition member 3C, and extends below the support plate 3F such that an exhaust opening 25B of the exhaust pipe 25A is located outward of one of the first members 3A of the front portion frame 3 (the first member 3A on the left side of the body in the present embodiment) with respect to the horizontal direction of the body.

As shown in FIGS. 4, 6, and 7, the radiator 23 is disposed so as to be fixed upright in front of the engine 21, that is to say, on the rear portion of the upper surface of the support plate 3F, so as to face the later-described second partition member 3C. A cooling fan 23D for supplying outside air to the radiator 23 is attached to the engine 21 behind the radiator 23.

Note that as shown in FIG. 4, a water supply opening 23A that allows a cooling fluid to be supplied to the radiator 23 is provided in the central portion of the upper end portion of the radiator 23, which is central with respect to the left-right direction.

Also, as shown in FIGS. 4, 6, and 7, the vertically-oriented second partition member 3C is disposed behind the radiator 23, that is to say, on the rear end portion of the support plate 3F, and the second partition member 3C partitions the radiator 23 from the engine 21 with the exception of the portion where the radiator 23 and the cooling fan 23D face each other.

As shown in FIG. 4, the notch 3D through which the tip portion of the air intake pipe 24A of the air cleaner 24 passes is formed in the side portion on one side of the upper end of the second partition member 3C so as to extend to a position at a predetermined height from the upper end, and an elastic body 3E, which is made of a sealing material that comes into contact with the under surface of the upper portion of the engine hood 60 when the engine hood 60 is in the later-described closed orientation, is attached to the edge portion of the second partition member 3C with the exception of the notch 3D, so as to conform to the edge portion.

In this case, the radiator 23 is located lower than the tip portion of the air intake pipe 24A of the air cleaner 24 that passes through the notch 3D of the second partition member 3C. Accordingly, the radiator 23 and the tip portion of the air intake pipe 24A of the air cleaner 24 do not interfere with each other, thus making it possible to compactly dispose the engine 21 and the radiator 23 in the front-rear direction of the body.

As shown in FIGS. 1 and 4 to 7, on the upper face of the support plate 3F of the front portion frame 3, a battery 46 that is one of various accessories is disposed so as to be placed in front of the radiator 23.

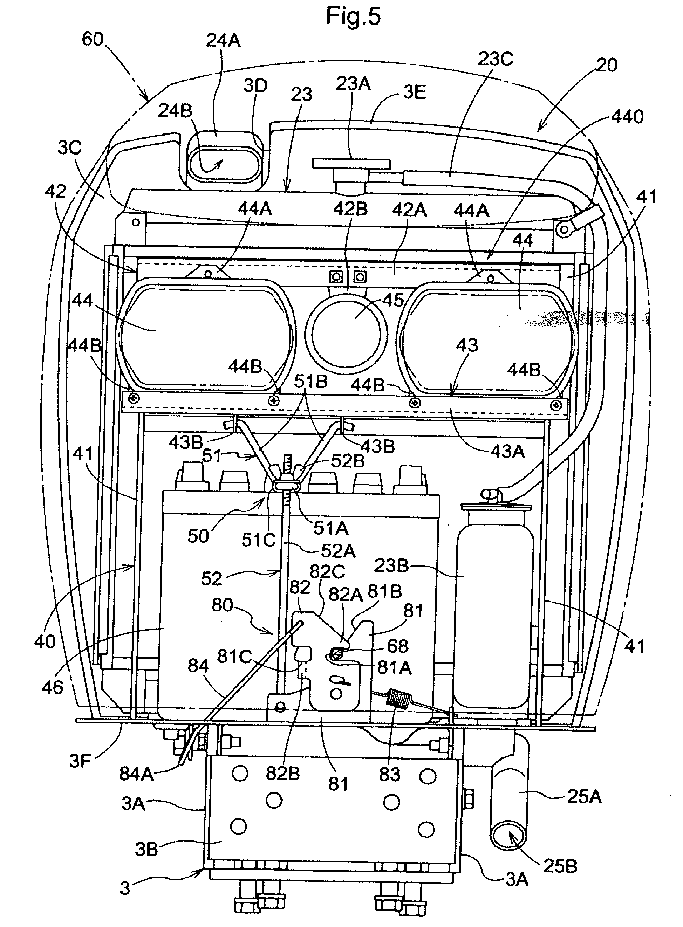

Also, as shown in FIGS. 4 and 5, an overflow tank 23B for the radiator 23 is disposed on one side of the battery 46 with respect to the horizontal direction. The upper end portion of the overflow tank 23B and the water supply opening of the radiator 23 are joined together by an overflow pipe 23C, thus achieving a configuration in which cooling fluid that has overflowed from the radiator 23 can flow through the overflow pipe 23C and be accumulated in the overflow tank 23B.

As shown in FIGS. 4 and 5, a support unit 40 formed so as to be U-shaped in a front view is fixed by welding to the upper surface of the support plate 3F constituting the body 1, so as to cross over the battery 46 and the overflow tank 23B.

Specifically, as shown in FIG. 5, the support unit 40 is constituted by a pair of left and right perpendicular support columns 41 and a cross beam 42. The pair of left and right perpendicular support columns 41 consist of vertically-oriented elongated plates that are fixed upright so as to sandwich the battery 46 and the overflow tank 23B on the horizontal sides thereof, and as shown in FIGS. 4 to 7, the cross beam 42 consists of a horizontally-oriented plate member that is fixed by welding so as connect the upper end portions of the left and right perpendicular support columns 41.

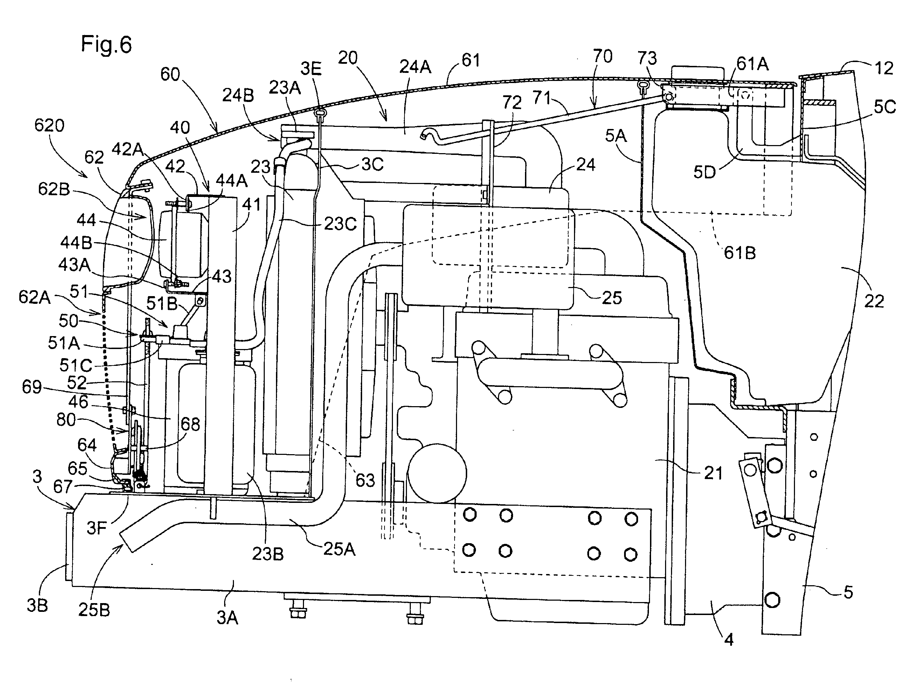

Note that as shown in FIGS. 4 and 6, in a side view, the front portion of the cross beam 42 extends forward beyond the perpendicular support columns 41, and a front end portion 42A of the cross beam 42 is bent in the downward direction of the body.

As shown in FIGS. 4 to 7, a sub cross beam 43 consisting of a horizontally-oriented plate member is fixed by welding so as to span the left and right perpendicular support columns 41 at a portion of the support unit 40 that is located between the cross beam 42, and the battery 46 and the overflow tank 23B with respect to the up-down direction of the body.

Specifically, as shown in FIGS. 4 and 6, the sub cross beam 43 is fixed such that the front portion thereof extends forward beyond the left and right perpendicular support columns 41, a front end portion 43A is bent in the upward direction of the body, and the front end portion 43A is located farther toward the front of the body in a side view than the downward-bent front end portion 42A of the cross beam 42.

As shown in FIGS. 4 to 7, the headlamp unit 440 is supported to the upper portion of the support unit 40, that is to say, to the cross beam 42 and the sub cross beam 43. This headlamp unit is constituted by a pair of left and right lights 44. The pair of left and right lights 44 may be integrated in advance with an adapter, or may be attached to the support unit 40 as members that are separate from each other. The lights 44 are attached in a positional relationship that is within a predetermined allowable range, with the optical axes of their illumination light facing the region in front of the body 1.

Specifically, as shown in FIGS. 4 to 6, a first attachment portion 44A that projects in the upward direction of the body is formed in the central portion of the upper end of each of the lights 44, and second attachment portions 44B that project in the downward direction of the body are respectively formed in left and right side portions of the lower end of each of the lights 44. As shown in FIGS. 4 to 6, the first attachment portions 44A are fixed by bolts to the downward-bent front end portion 42A of the cross beam 42 from behind with respect to the body, and the left and right second attachment portions 44B are fixed by bolts to the upward-bent front end portion 43A of the sub cross beam 43 from in front with respect to the body, thus supporting the lights 44.

In other words, the cross beam 42 and the sub cross beam 43 of the support unit 40, which correspond to the upper portion of the support unit 40, correspond to a stay for supporting the lights 44, and the pair of left and right lights 44 are each supported at three points by the first attachment portion 44A and the left and right second attachment portions 44B.

Note that in the present embodiment, the lights 44 are connected to the battery 46 via a harness (not shown) and a control device (not shown) that can control the lighting and extinguishing of the lights 44.

As shown in FIGS. 4 and 5, a horn 45 is attached in the central portion of the cross beam 42 of the support unit 40 so as to be located between the pair of left and right lights 44.

Specifically, a stay 42B for the horn 45 is fixed by bolts so as to extend in the downward direction of the body in the central portion of the downward-bent front end portion 42A of the cross beam 42, which is central in the left-right direction of the body, and the horn 45 is attached to the stay 42B for the horn 45 so as to face forward.

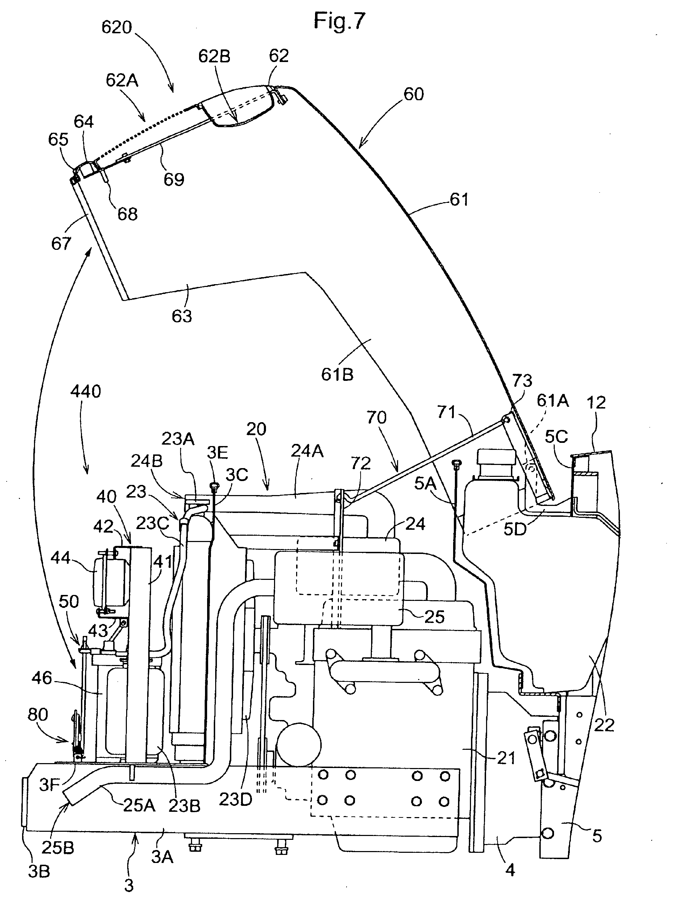

Note that in the present embodiment, as shown in FIGS. 4 to 7, the sub cross beam 43 of the support unit 40 is fixed at a position at which a gap is formed between it and the upper surface of the battery 46 and the upper surface of the overflow tank 23B. Also, as shown in FIG. 5, the left and right perpendicular support columns 41 are also fixed such that gaps are formed between them and the battery 46 and the overflow tank 23B in the left-right direction of the body. Furthermore, as shown in FIG. 5, the battery 46 and the overflow tank 23B are also disposed such that a gap is formed therebetween in the left-right direction of the body. Moreover, as shown in FIGS. 6 and 7, the battery 46 and the overflow tank 23B are disposed such that a gap is formed between the front surface of the radiator 23 and the rear surfaces of the battery 46 and the overflow tank 23B. As shown in FIG. 5, the pair of left and right lights 44 and the horn 45 are also disposed such that gaps are formed therebetween in the left-right direction of the body.

Accordingly, even though the battery 46, the overflow tank 23B, the support unit 40, the lights 44, and the horn 45 are disposed in front the radiator 23, outside air is supplied from the front of the body to the radiator 23 through the gaps without being obstructed by these members.

As shown in FIGS. 4 to 7, the support unit 40 includes a fixing member 50 that allows the battery 46, which is disposed so as to be placed on the front portion frame 3, to be fixed so as to be immobile. As shown in FIGS. 4 to 6, the fixing member 50 is constituted by a pressing component 51 that comes into contact with the upper surface of the battery 46, and a constricting component 52 that is a constricting means for fixing the battery 46 by constricting it from above and below with the pressing component 51 and the support plate 3F.

As shown in FIGS. 4 to 6, the pressing component 51 consists of a round bar member that is formed in a bent manner so as to include a front portion 51A that is U-shaped in a plan view and left and right rear portions 51B that respectively extend from the left and right rear end portions of the U-shaped front portion 51A in a diagonally upward and horizontally outward direction with respect to the body, and furthermore extend in the rearward direction of the body. Also, as shown in FIG. 5, the rear end portions of the left and right rear portions 51B of the pressing component 51 are formed so as to be bent in the left-right direction of the body, left and right brackets 43B are formed as projections on the lower surface of the sub cross beam 43 of the support unit 40, and the abovementioned left and right rear end portions are supported to the left and right brackets 43B so as to enable the pressing component 51 to swing up and down about an axis in the left-right direction of the body.

Note that as shown in FIGS. 4 to 6, the pressing component 51 is constituted such that when it is swung in the up-down direction, the U-shaped front portion 51A comes into contact with the upper surface of the battery 46, and furthermore the tip portion of the U-shaped front portion 51A extends forward beyond the front edge portion of the upper surface of the battery 46. Hereinafter, the U-shaped front portion 51A of the pressing component 51 will be referred to as the contact portion 51A.

As shown in FIG. 5, the constricting component 52 consists of a constricting rod 52A that is a round bar member, and a constricting wing nut 52B, and as shown in FIGS. 4 and 5, the lower end portion of the constricting rod 52A is formed so as to be hook-shaped, and a screw portion is formed in the upper end portion of the constricting rod 52A. As shown in FIG. 5, the constricting wing nut 52B is constituted so as to be capable of being screwed onto the screw portion of the constricting rod 52A.

Also, as shown in FIGS. 4 and 5, a hole that penetrates in the front-rear direction of the vehicle is formed in the lower end portion of a locking bracket 81 of a later-described locking mechanism 80 that is fixed to the upper surface of the support plate 3F in front of the battery 46, and the hook-shaped lower end portion of the constricting rod 52A is engaged in this hole. Also, when the contact portion 51A of the pressing component 51 is in contact with the upper surface of the battery 46, the screw portion of the upper end portion can be inserted into the tip portion of the contact portion 51A that extends forward beyond the front edge portion of the upper surface of the battery 46.

Note that the hook-shaped lower end portion of the constricting rod 52A is engaged at a position at which it does not interfere with the members constituting the later-described locking mechanism 80.

Since the fixing member 50 is constituted as described above, when the screw portion of the upper end portion of the constricting rod 52A of the constricting component 52 is inserted into the tip portion of the contact portion 51A of the pressing component 51, which extends forward beyond the front edge portion of the upper surface of the battery 46, and the constricting wing nut 52B is screwed on the screw portion from above the contact portion 51A, the upper surface of the battery 46 is pressed by the pressing component 51, and the lower surface of the battery 46 is pressed by the support plate 3F.

In other words, the battery 46 can be fixed by being constrained from above and below by the fixing member 50 with which the support unit 40 is provided.

Note that as shown in FIGS. 5 and 6, in order to more reliably press down the upper surface of the battery 46 with the pressing component 51, a ring-shaped elastic member 51C made of rubber or the like may be fit onto the contact portion 51A of the pressing component 51, without covering the tip portion that extends forward beyond the front edge of the upper surface of the battery 46.

As shown in FIGS. 1, 6, and 7, a third partition member 5C is fixed by coupling above the front end portion of the intermediate transmission case 5, and the third partition member 5C partitions the steering post 12 from the region in front of the steering post 12 while supporting the steering post 12 and surrounding the periphery of the fuel tank 22 in the up-down direction and the left-right direction of the body. A pair of left and right brackets 5D (referred to hereinafter as "first brackets 5D") extend forward from the upper portion of the front surface of the third partition member 5C.

The engine hood 60 is axially supported to the left and right first brackets 5D of the third partition member 5C so as to be able to swing up and down between a lower closed orientation and an upper open orientation. In the closed orientation, the engine hood 60 covers the engine room 20 from above with the lower portion of the front portion of the engine hood 60 being in contact with the support plate 3F, as shown in FIGS. 1 and 3, and in the open orientation, the front portion of the engine hood 60 separates away from the support plate 3F in the upward direction of the body so as to expose the region above the engine room 20, as shown in FIG. 7. In other words, when the engine hood 60 is in the open orientation, the engine 21 (including the engine accessories), the battery 46, the overflow tank 23B, the support unit 40, the lights 44, and the horn 45 are exposed to the outside and can be accessed. When the engine hood 60 is in the closed orientation, it covers these elements.

Specifically, as shown in FIGS. 2 to 4, the engine hood 60 is constituted by a plate member and includes a first hood portion 61 that is a top panel, a second hood portion 62 and a fourth hood portion 64 that are a front panel 620, and third hood portions 63 that are a pair of left and right side panels. The second hood portion 62 is located directly below the front end of the first hood portion 61. A front grill portion 62A is disposed between the second hood portion 62 and the fourth hood portion 64, and the second hood portion 62, the front grill portion 62A, and the fourth hood portion 64 constitute the front panel 620.

Furthermore, as shown in FIGS. 6 to 8, the engine hood 60 includes a pair of left and right brackets 61A (referred to hereinafter as the "second brackets 61A") on the rear end portion of the under surface of the first hood portion 61. The left and right second brackets 61A are axially supported to the left and right first brackets 5D of the third partition member 5C so as to be able to swing about an axis in the left-right direction of the body. This enables the engine hood 60 to swing up and down about a rear fulcrum point.

As shown in FIGS. 2 to 4, the first hood portion 61 includes a pair of left and right side portions 61B.

As shown in FIGS. 2 to 4, the left and right third hood portions 63 are configured so as to extend from the front end portion of the left and right side portions 61B of the first hood portion 61 in a diagonally downward and forward direction with respect to the body in a side view of the body, and face each other in the left-right direction of the body.

As shown in FIGS. 2 to 4 and 9, the fourth hood portion 64 is configured so as to connect the forward part of the lower end portions of the left and right third hood portions 63.

Also, as shown in FIGS. 6 and 7, an elongated plate-shaped stay 69 is fixed in the up-down direction of the body to the front end portion of the under surface of the first hood portion 61 and the central portion of the under surface of the fourth hood portion 64, which is central in the left-right direction of the body, so as to connect the front end portion and the central portion.

As shown in FIGS. 2 to 4, the second hood portion 62 is supported so as to be fixed by the stay 69, the left and right third hood portions 63, and the fourth hood portion 64.

Note that as shown in FIGS. 1, 3, and 9, the engine hood 60 is configured such that when it is in the closed orientation, the lower end portions of the fourth hood portion 64 and the left and right third hood portions 63 are located immediately above and conform to the front edge portion and the left and right side edge portions of the support plate 3F.

In other words, when the engine hood 60 is in the closed orientation, the sides, front, and top of the support plate 3F are covered by the front portion of the first hood portion 61, the second hood portion 62, the left and right third hood portions 63, and the fourth hood portion 64.

As shown in FIGS. 1, 3, 4, 6, and 9, the front grill portion 62A that can allow air to pass from the front when the engine hood 60 is in the closed orientation is provided in a lower portion of the second hood portion 62. As an example of light transmitting portions, a pair of left and right aperture portions 62B are formed so as to penetrate the upper portion of the second hood portion 62, and when the engine hood 60 is in the closed orientation, these aperture portions 62B oppose the pair of left and right lights 44 that are attached to the upper portion of the support unit 40.

Specifically, the pair of left and right aperture portions 62B include an upper surface, a lower surface, and left and right side surfaces as aperture edges that extend from the front surface of the second hood portion 62 in the rearward direction of the body, and these aperture edges have substantially the same shape as the front surface of the lights 44. Note that as shown in FIG. 6, the rear end portions of the aperture edges of the aperture portions 62B are in close proximity with the peripheral edge portions of the front surfaces of the lights 44 when the engine hood 60 is in the closed orientation.

The pair of left and right lights 44 are supported to the support unit 40, not the engine hood 60, and shine light toward the front of the body through the aperture portions 62B.

Even when the engine hood 60 is in the open orientation, the positions of the pair of left and right lights 44 do not change, and this has the advantage of facilitating replacement and maintenance and having favorable serviceability. The lights 44 are fixed to the support unit 40 and do not move along with the opening and closing of the engine hood 60.

As shown in FIGS. 3, 4, 6, 7, 9, and 10, in the lower portion of the front portion of the engine hood 60, a holding portion 65 is provided in the central portion of the lower end portion of the fourth hood portion 64, which is central in the left-right direction of the body, and the holding portion 65 consists of a recessed portion that is formed facing the interior of the body and can be grabbed by the user's hand when opening the engine hood 60 from the closed orientation to the open orientation.

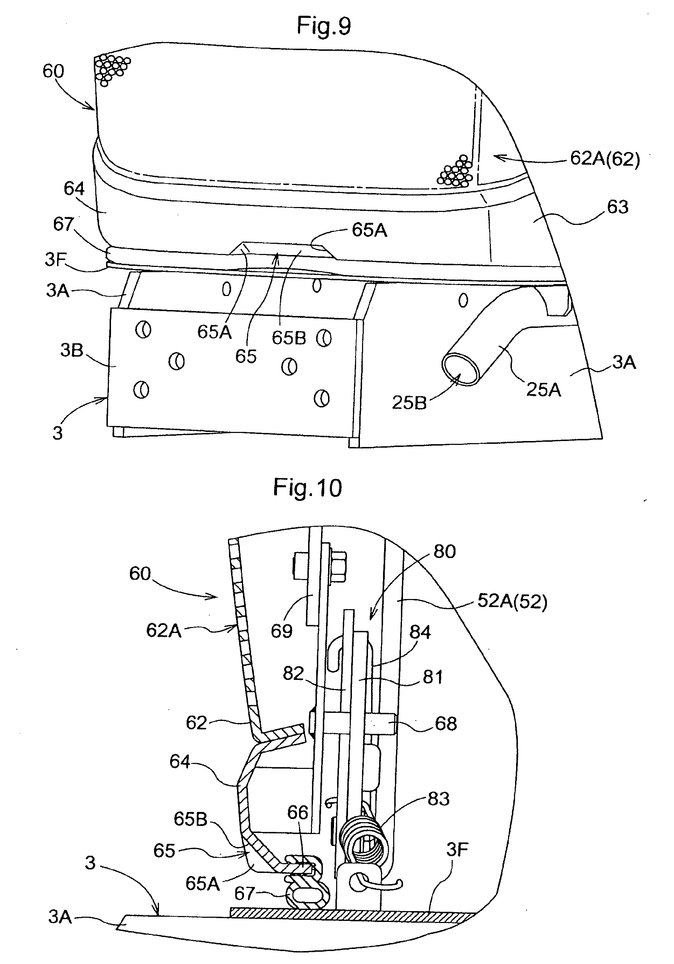

Specifically, as shown in FIGS. 9 and 10, the holding portion 65 is formed so as to open in the forward direction of the body and the downward direction of the body so as to have left and right side surfaces 65A and a rear surface 65B, and the rear surface 65B is in a forward tilted orientation in a side view. Note that the left and right side surfaces 65A of the holding portion 65 are formed such that the distance therebetween increases toward the front of the body. Note that the holding portion 65 is formed so as to be large enough to be capable of being grabbed by the user's hand.

Since the holding portion 65 consisting of the recessed portion is formed integrally with the engine hood 60, there is no need for a special-purpose member that is to be grabbed by the user's hand when opening the engine hood 60 from the closed orientation to the open orientation.

As shown in FIG. 10, in the front portion of the engine hood 60, a projection portion 66 that is bent so as to project toward the interior of the body is formed in the lower end portion of the engine hood 60 that is below the holding portion 65 and the lower end portion of the engine hood 60 that is on both horizontal sides of the holding portion 65, that is to say, in the lower end portion of the fourth hood portion 64 and the lower end portions of the left and right third hood portions 63 (the projection portion 66 of the left and right third hood portions 63 is not shown), and the projection portion 66 serves as the lower edge portion of the front portion of the engine hood 60.

Note that the part of the projection portion 66 of the fourth hood portion 64 that is at the holding portion 65 is formed so as to project in conformity with the lower end portions of the left and right side surfaces and the lower end portion of the rear surface of the holding portion 65.

A sealing member 67 consisting of an elastic member is attached to the projection portion 66 of the lower end portions of the fourth hood portion 64 and the left and right third hood portions 63 so as to conform to the projection portion 66.

Specifically, as shown in FIG. 10, the sealing member 67 is constituted by an upper portion that can be attached to the projection portion 66 by fitting around it so as to conform to it, and a lower portion that comes into contact with and conforms to the upper surfaces of the front edge portion and the left and right side edge portions of the support plate 3F.

Note that as shown in FIGS. 3, 6, 9, and 10, the lower portion of the sealing member 67 undergoes compression deformation in the up-down direction of the body due to being sandwiched from above and below by the left and right third hood portions 63 and the fourth hood portion 64 and the support plate 3F when the engine hood 60 is held in the closed orientation by the locking mechanism 80. In other words, a tight seal is achieved between the lower portion of the front portion of the engine hood 60 and the support plate 3F, and dust and the like does not easily enter the radiator 23.

Also, since the projection portion 66 at the holding portion 65 is formed so as to project in conformity with the lower end portion of the holding portion 65 as described above, as shown in FIGS. 9 and 10, the sealing member 67 at the projection portion 66 at the holding portion 65 comes into contact with a region of the upper surface of the support plate 3F that is rearward of the front edge portion thereof.

Accordingly, when the engine hood 60 is in the closed orientation, a gap is formed between the holding portion 65 and the upper face of the front edge portion of the support plate 3F even while the region below the holding portion 65 is tightly sealed, thus making it possible to facilitate the grabbing of the holding portion 65 by the user's hand.

When the holding of the engine hood 60 in the closed orientation by the locking mechanism 80 is canceled, the sealing member 67 that had undergone compression deformation returns to its original state through elastic deformation, the front portion of the engine hood 60 is pressed upward, and the gap between the holding portion 65 and the upper surface of the support plate 3F becomes larger.

As shown in FIGS. 6 to 8, a support mechanism 70 that can hold the engine hood 60 in the open orientation is provided in the rear portion of the engine hood 60 having the above-described configuration. The support mechanism 70 is constituted by a support rod 71 that consists of a round bar member disposed on the engine hood 60 side, a coil spring 73 disposed on the support rod 71, and a support bracket 72 on the engine 21 side.

Specifically, as shown in FIGS. 6 to 8, one end portion of the support rod 71 is bent in the leftward direction of the body (or in the rightward direction of the body), and the support rod 71 is axially supported to the rear portion of the under surface of the first hood portion 61 so as to be able to swing forward and backward about an axis the left-right direction of the body. The other end portion of the support rod 71 is formed so as to be bent in the shape of a clasp hook.

The coil spring 73 is attached to the bent end portion of the support rod 71 and biases the support rod 71 in the rearward direction of the body.

Also, the support bracket 72 is fixed so as to be coupled to the upper portion of the engine 21 so as to extend in the upward direction of the body, and an elongated hole 72A that is oriented in the up-down direction of the body and penetrates in the front-rear direction of the body is formed in the upper end portion of the support bracket 72. The support rod 71 is inserted through the elongated hole 72A of the support bracket 72.

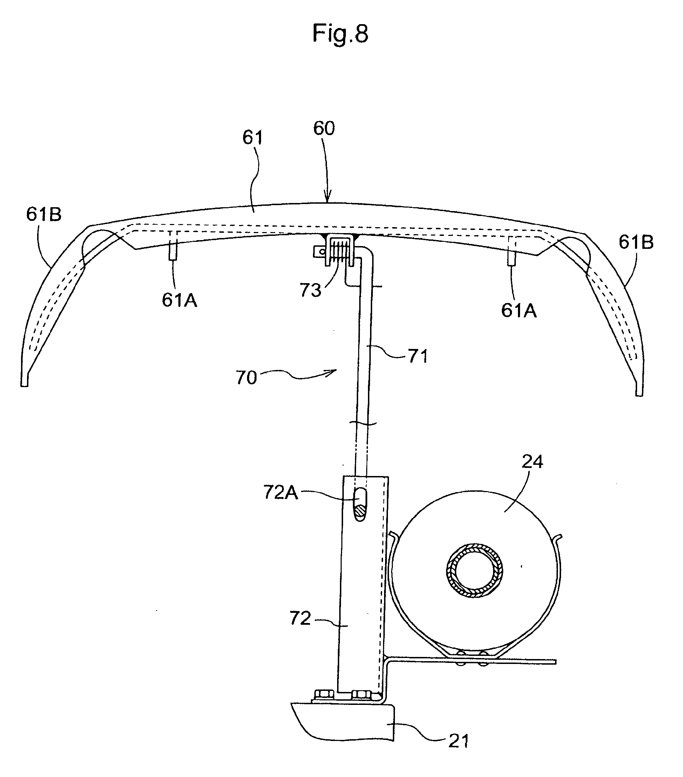

According to the support mechanism 70 having the above-described configuration, when the engine hood 60 is swung in the upward direction of the body about the rear fulcrum point so as to be put in the open orientation as shown in FIG. 7, the clasp hook-shaped other end portion of the support rod 71 that is biased in the rearward direction of the body by the coil spring 73 automatically engages with the lower end portion of the elongated hole 72A of the support bracket 72 as shown in FIGS. 7 and 8, and thus the engine hood 60 can be held in the open orientation.

In order to return the engine hood 60 to the closed orientation, the clasp hook-shaped other end portion of the support rod 71 is disengaged from the elongated hole 72A of the support bracket 72, and the support rod 71 is inserted through the elongated hole 72A while swinging the engine hood 60 in the downward direction of the body.

As shown in FIGS. 4 to 7, the locking mechanism 80 is provided on the upper surface of the support plate 3F of the support unit 40, in a portion of the upper surface that is in front of the battery 46.

Specifically, as shown in FIGS. 4, 5, and 10 to 12, the locking mechanism 80 is constituted by the locking bracket 81 that is fixed to the support plate 3F in an upright manner so as to be oriented in the left-right direction of the body, a retaining latch 82 that can latch a later-described latch target 68 provided on the engine hood 60 side, a spring 83 that biases the retaining latch 82 so as to be in a later-described retaining orientation, and an operation lever 84 serving as an operation component that allows the retaining latch 82 to be operated from the later-described retaining orientation to a later-described non-retaining orientation.

Note that as shown in FIGS. 6, 7, and 10, the latch target 68 consists of a round bar member that is fixed to the lower end portion of the stay 69, which supports the second hood portion 62, so as to extend in the rearward direction of the body.

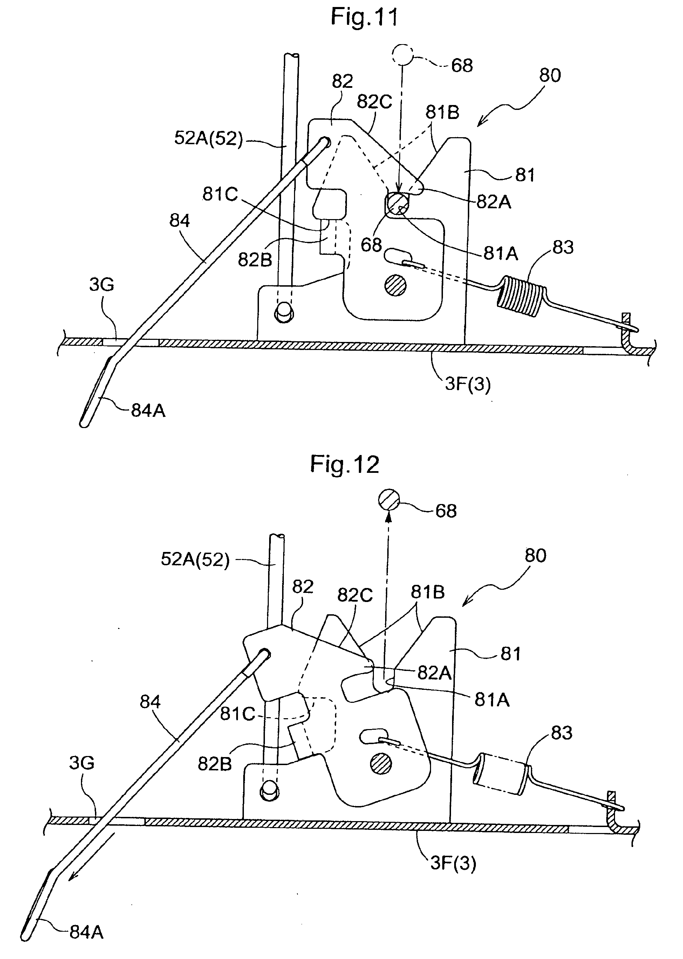

As shown in FIGS. 5, 11, and 12, a recessed portion 81A that opens in the front-rear direction of the body and in the upward direction of the body is formed in the upper portion of the locking bracket 81. Specifically, when the engine hood 60 is put in the closed orientation, the latch target 68 engagedly enters the recessed portion 81A from above with respect to the body as shown in FIG. 11, and when the engine hood 60 is put in the open orientation, the latch target 68 separates from the recessed portion 81A in the upward direction of the body as shown in FIG. 12. Hereinafter, the recessed portion 81A of the locking bracket 81 will be referred to as the engagement recessed portion 81A.

Note that as shown in FIGS. 11 and 12, sloping surfaces 81B that increase in height outward away from the engagement recessed portion 81A in the horizontal direction of the body are formed on the left and right sides of the engagement recessed portion 81A of the locking bracket 81 with respect to the left-right direction of the body, and thus the latch target 68 is reliably guided to the engagement recessed portion 81A when the engine hood 60 is put in the closed orientation.

Also, a notch 81C for penetration by a later-described stopper portion 82B of the retaining latch 82 is formed in one lateral side portion (on the right side of the body in the present embodiment) of the locking bracket 81 so as to be oriented in the left-right direction of the body.

As shown in FIG. 11, the retaining latch 82 is constituted such that the lower portion thereof is axially supported to the lower end portion of the locking bracket 81, and thus can swing left and right relative to the locking bracket 81 about an axis in the front-rear direction of the body.

Also, as shown in FIGS. 11 and 12, a retaining projection portion 82A is formed as a projection in one side portion (on the left side of the body in the present embodiment) of the upper portion of the retaining latch 82 so as to be located above the latch target 68 when the latch target 68 has engagedly entered the engagement recessed portion 81A and the retaining latch 82 has been swung, and thus the retaining projection portion 82A can prevent the latch target 68 from coming free in the upward direction of the body.

Specifically, the retaining latch 82 is constituted so as to be able to swing between the retaining orientation in which it can prevent the latch target 68 from coming free in the upward direction of the body as shown in FIG. 11, and the non-retaining orientation in which the retaining projection portion 82A separates away from the region above the latch target 68, and the latch target 68 can come free in the upward direction of the body as shown in FIG. 12.

Also, as shown in FIGS. 11 and 12, the stopper portion 82B, which consists of a projection piece that projects so as to extend in the rearward direction of the body, is provided in the other side portion (on the right side of the body in the present embodiment) of the retaining latch 82. The stopper portion 82B penetrates the notch 81C of the locking bracket 81 and comes into contact with the edge of the upper end of the notch 81C of the locking bracket 81 when the retaining latch 82 is in the retaining orientation as shown in FIG. 11.

Furthermore, a sloping surface 82C is formed in the retaining latch 82 in order to apply component force for swinging the retaining latch 82 from the retaining orientation to the non-retaining orientation upon coming into contact with the latch target 68 that descends from above toward the engagement recessed portion 81A in order to engagedly enter it.

As shown in FIGS. 5 and 11, the spring 83 is attached so as to be on one transverse side (on the left transverse side of the body in the present embodiment) of the locking bracket 81 and so as to span between the support plate 3F and a hole formed penetrating in the front-rear direction of the body in the lower portion of the retaining latch 82, and the spring 83 biases the retaining latch 82 toward the retaining orientation.

As shown in FIGS. 11 and 12, one end portion of the operation lever 84, which is an operation component consisting of a round bar member, is formed in the shape of a hook, and an operation portion 84A for manual operation is formed in the other end portion.

As shown in FIGS. 11 and 12, the hook-shaped end portion of the operation lever 84 is engaged with the hole formed so as to penetrate in the front-rear direction of the body on the tip side of the retaining latch 82, and as shown in FIGS. 4, 11, and 12, the other end portion that has the operation portion 84A is inserted through an elongated hole 3G that is oriented in the left-right direction of the body and formed so as to penetrate in the up-down direction of the body in a portion of the support plate 3F that is located on the other transverse side (the right transverse side of the body in the present embodiment) of the locking bracket 81.

Specifically, as shown in FIGS. 3 and 5, the operation portion 84A of the operation lever 84 is located at a position that is below the support plate 3F and outward of the first member 3A (the first member 3A on the right side of the body in the present embodiment) of the front portion frame 3 in the horizontal direction of the body, and by pulling the operation portion 84A in the other end portion of the operation lever 84, it is possible to perform an operation for swinging the retaining latch 82 from the retaining orientation to the non-retaining orientation against the biasing action of the spring 83 as shown in FIGS. 11 and 12.

According to the locking mechanism 80 having the above-described configuration, as the engine hood 60 in the open orientation is swung in the downward direction of the body, the latch target 68 of the engine hood 60 comes into contact with the sloping surface 82C of the retaining latch 82 that is in the retaining orientation due to the biasing action of the spring 83. Next, when the engine hood 60 is further swung in the downward direction of the body, the retaining latch 82 is swung toward the non-retaining orientation in conjunction with the descending latch target 68, and then the latch target 68 engagedly enters the engagement recessed portion 81A of the locking bracket 81. The retaining latch 82 is then no longer subjected to force from the latch target 68 for being swung toward the non-retaining orientation, and returns to the retaining orientation due to the biasing action of the spring 83. In this case, as shown in FIG. 11, the retaining projection portion 82A of the retaining latch 82 is located above the latch target 68 that has engagedly entered the engagement recessed portion 81A, and since the retaining latch 82 is biased toward the retaining orientation by the spring 83, the latch target 68 is prevented from coming free in the upward direction of the body, thus making it possible to hold the engine hood 60 in the closed orientation.

### Other Embodiments

(1) In the above embodiment, the holding portion 65 consisting of a recessed portion is formed in the lower portion of the front portion of the engine hood 60, more specifically in the central portion of the lower end portion of the fourth hood portion 64, which is central in the left-right direction of the body, as shown in FIGS. 3, 4, 6, 7, 9, and 10. However, the holding portion 65 is not limited to being formed at this position, and can be formed at any position as long as it is in the lower portion of the fourth hood portion 64 (including regions other than the lower end portion) and in the lower portion of the left and right third hood portions 63 (including regions other than the lower end portion).
   Also, in the above embodiment, the holding portion 65 consisting of a recessed portion is formed so as to open in the forward direction of the body and in the downward direction of the body so as to have the left and right side surfaces 65A and the rear surface 65B. However, the holding portion 65 is not limited to having this shape as long as it is large enough to be grabbed by the user's hand. Furthermore, although one holding portion 65 is provided in the above embodiment, a plurality of holding portions 65 may be formed.
(2) In the configuration of the above embodiment, the operation portion 84A of the operation lever 84 is located outward of the right-side first member 3A of the front portion frame 3 of the support plate 3F in the horizontal direction of the body, and the exhaust opening 25B of the exhaust pipe 25A of the muffler 25 is located outward of the left-side first member 3A of the front portion frame 3 in the horizontal direction of the body. However, a configuration is possible in which the operation portion 84A of the operation lever 84 is located outward of the left-side first member 3A of the front portion frame 3 of the support plate 3F in the horizontal direction of the body, and the various configurations of the locking mechanism 80 are accordingly also reversed in the left-right direction.
   In the case of a configuration in which the operation portion 84A of the operation lever 84 is located outward of the left-side first member 3A of the front portion frame 3 of the support plate 3F in the horizontal direction of the body as described above, the exhaust opening 25B of the exhaust pipe 25A of the muffler 25 is configured so as to be located outward of the right-side first member 3A of the front portion frame 3 in the horizontal direction of the body.
(3) In the above embodiment, the pair of left and right aperture portions 62B formed so as to penetrate the second hood portion 62 are applied as the light transmitting portions provided in the second hood portion 62 that constitutes the front panel 620 of the engine hood 60.
   The function of the light transmitting portions is to make it possible for the optical axes of the lights 44 of the headlamp unit 440 to be transmitted and illuminate the region in front of the vehicle when the engine hood is in the closed orientation. Accordingly, instead of the aperture portions 62B, it is possible to apply an embodiment in which a transparent material is fitted into the portions corresponding to the aperture portions 62B. In other words, the light transmitting portions can have any structure as long as they allow the transmission of light beams that are emitted from the headlamp unit 440.
(4) Although the locking mechanism 80 is configured so as to be included in the support plate 3F in the above embodiment, a configuration is possible in which the locking mechanism 80 is included in the engine hood 60, and the latch target 68 is included in the support plate 3F. Also, the locking mechanism 80 is not limited to the above-described configuration, and can have any configuration as long as it can hold the engine hood 60 in the closed orientation.
(5) Although a configuration applying four-wheel drive specifications in which the left and right front wheels 8 and the left and right rear wheels 9 are the drive wheels is described in the above embodiment, a configuration applying two-wheel drive specifications in which only the left and right rear wheels 9 are the drive wheels is possible.

### List of Reference Numerals

- 1: Body
- 3: Front portion frame
- 3A: First member
- 3B: Second member
- 3C: Second partition member
- 3E: Elastic body
- 3F: Support plate
- 20: Engine room
- 21: Engine
- 40: Support unit
- 41: Perpendicular support column
- 42: Cross beam
- 42A: Front end portion
- 42B: Stay
- 43: Sub cross beam
- 43A: Front end portion
- 43B: Bracket
- 440: Headlamp unit
- 44: Light
- 44A: First attachment portion
- 44B: Second attachment portion
- 45: Horn
- 46: Battery (accessory)
- 50: Fixing member
- 51: Pressing component
- 52: Constricting component
- 60: Engine hood
- 61: First hood portion (top panel)
- 61A: Bracket
- 61A: Second bracket
- 61B: Side portion
- 620: Front panel
- 62: Second hood portion (front panel)
- 62A: Front grill portion
- 62B: Aperture portion (light transmitting portion)
- 63: Third hood portion (side panel)
- 64: Fourth hood portion (front panel)
- 65: Latch target
- 66: Projection portion
- 67: Sealing member
- 68: Latch target
- 69: Stay
- 80: Locking mechanism
- 81: Locking bracket
- 82: Retaining latch
- 82: Operation portion
- 83: Spring
- 84: Operation lever

## Claims

1. A tractor comprising:
a body (1);
an engine room (20) formed in a front region of the body (1);
a headlamp unit (440); and
an engine hood (60) supported on the body so as to be capable of being displaced between a closed orientation of covering the engine room from above and an open orientation of exposing the engine room, the engine hood including
a top panel (61),
a front panel (620), and
side panels (63),
**characterised in that** a support unit (40) is disposed in front of the engine room (20), the support unit (40) having a left perpendicular support column (41) and a right perpendicular support column (41) that are provided upright on the body (1) with a space therebetween in a transverse direction of the body, and a cross beam (42) that connects upper portions of the left perpendicular support column (41) and the right perpendicular support column (41) to each other,
the headlamp unit (440) is supported on an upper portion of the support unit (40), and
a light transmitting portion (62B) is provided in the front panel (620), the light transmitting portion (62B) being disposed so as to transmit illumination light from the headlamp unit (440) when the engine hood (60) is in the closed orientation.

2. The tractor according to claim 1, **characterised in that** an accessory (46) attached to the body (1) is disposed between the left perpendicular support column (41) and the right perpendicular support column (41).

3. The tractor according to claim 2, **characterised in that** the accessory (46) is a battery.

4. The tractor according to claim 3, **characterised in that** a fixing member (50) that fixes the battery (46) is attached to the support unit (40).

5. The tractor according to any of claims 2 to 4, **characterised in that** a locking mechanism (80) that locks the engine hood (60) in the closed orientation is disposed in front of the accessory (46).

6. The tractor according to any of claims 1 to 5, **characterised in that** the light transmitting portion (62B) is an aperture portion formed in the front panel (620).

7. The tractor according to any of claims 1 to 5, **characterised in that** the light transmitting portion (62B) is a transparent plate fitted in the front panel (620).

8. The tractor according to any of claims 1 to 7, **characterised in that** a front grill panel (62A) having a mesh configuration is disposed in the front panel (620).

## Patentansprüche

1. Traktor, umfassend:
eine Karosserie (1),
einen Motorraum (20), der in einem vorderen Bereich der Karosserie (1) gebildet ist,
eine Scheinwerfereinheit (440) und
eine Motorhaube (60), die durch die Karosserie derart getragen wird, dass es möglich ist, sie zwischen einer geschlossenen Ausrichtung des Abdeckens des Motorraums von oben und einer offenen Ausrichtung des Freilegens des Motorraums zu bewegen, wobei die Motorhaube umfasst:
eine obere Platte (61),
eine frontseitige Platte (620) und
Seitenplatten (63),
**dadurch gekennzeichnet, dass** eine Trageinheit (40) vor dem Motorraum (20) angeordnet ist, wobei die Trageinheit (40) eine linke senkrechte Tragsäule (41) und eine rechte senkrechte Tragsäule (41), welche in einer Querrichtung der Karosserie voneinander beabstandet aufrecht an der Karosserie (1) vorgesehen sind, und einen Querbalken (42), der obere Abschnitte der linken senkrechten Tragsäule (41) und der rechten senkrechten Tragsäule (41) miteinander verbindet, aufweist,
wobei die Scheinwerfereinheit (440) an einem oberen Abschnitt der Trageinheit (40) getragen wird, und
eine lichtdurchlässige Einheit (62B) in der frontseitigen Platte (620) vorgesehen ist, wobei die lichtdurchlässige Einheit (62B) derart angeordnet ist, dass sie Beleuchtungslicht von der Scheinwerfereinheit (440) durchlässt, wenn sich die Motorhaube (60) in der geschlossenen Ausrichtung befindet.

2. Traktor nach Anspruch 1, **dadurch gekennzeichnet, dass** ein Zusatzteil (46), das an der Karosserie (1) befestigt ist, zwischen der linken senkrechten Tragsäule (41) und der rechten senkrechten Tragsäule (41) angeordnet ist.

3. Traktor nach Anspruch 2, **dadurch gekennzeichnet, dass** das Zusatzteil (46) eine Batterie ist.

4. Traktor nach Anspruch 3, **dadurch gekennzeichnet, dass** ein Befestigungsglied (50), welches die Batterie (46) befestigt, an der Trageinheit (40) befestigt ist.

5. Traktor nach einem beliebigen der Ansprüche 2 bis 4, **dadurch gekennzeichnet, dass** ein Verriegelungsmechanismus (80), der die Motorhaube (60) in der geschlossenen Ausrichtung verriegelt, vor dem Zusatzteil (46) angeordnet ist.

6. Traktor nach einem beliebigen der Ansprüche 1 bis 5, **dadurch gekennzeichnet, dass** der lichtdurchlässige Abschnitt (62B) ein Öffnungsabschnitt ist, der in der frontseitigen Platte (620) gebildet ist.

7. Traktor nach einem beliebigen der Ansprüche 1 bis 5, **dadurch gekennzeichnet, dass** der lichtdurchlässige Abschnitt (62B) eine transparente Platte ist, die in der frontseitigen Platte (620) angebracht ist.

8. Traktor nach einem beliebigen der Ansprüche 1 bis 7, **dadurch gekennzeichnet, dass** eine Frontgrillplatte (62A), die eine Gitterkonfiguration aufweist, in der frontseitigen Platte (620) angeordnet ist.

## Revendications

1. Tracteur comprenant :
une carrosserie (1) ;
un compartiment moteur (20) formé dans la région avant de la carrosserie (1) ;
un module de phares (440) ; et
un capot moteur (60) supporté sur la carrosserie de façon à être capable de se déplacer entre une orientation fermée de couverture du compartiment moteur depuis le dessus et une orientation ouverte d'accès au compartiment moteur, le capot moteur incluant :
un panneau supérieur (61) ;
un panneau avant (620) ; et
des panneaux latéraux (63),
**caractérisé :**
**en ce qu'**un module formant support (40) est disposé devant le compartiment moteur (20), le module formant support (40) ayant un montant de support vertical gauche (41) et un montant de support vertical droit (41) qui sont disposés dressés vers le haut sur la carrosserie (1) avec un espace entre eux dans la direction transversale de la carrosserie, une traverse (42) qui relie l'une à l'autre les parties supérieures du montant de support vertical gauche (41) et du montant de support vertical droit (41) ;
**en ce que** le module de phares (440) est supporté sur la partie supérieure du module formant support (40) ; et
**en ce qu'**une partie transmettant la lumière (62B) est disposée dans le panneau avant (620), la partie transmettant la lumière (62B) étant disposée de façon à transmettre la lumière d'éclairage provenant du module de phares (440) lorsque le capot moteur (60) est dans l'orientation fermée.

2. Tracteur selon la revendication 1, **caractérisé en ce qu'**un accessoire (46) fixé à la carrosserie (1) est disposé entre le montant de support vertical gauche (41) et le montant de support vertical droit (41).

3. Tracteur selon la revendication 2, **caractérisé en ce que** l'accessoire (46) est une batterie.

4. Tracteur selon la revendication 3, **caractérisé en ce qu'**un élément de fixation (50) qui fixe la batterie (46) est attaché au module formant support (40).

5. Tracteur selon l'une quelconque des revendications 2 à 4, **caractérisé en ce qu'**un mécanisme de verrouillage (80) qui verrouille le capot moteur (60) dans l'orientation fermée est disposé devant l'accessoire (46).

6. Tracteur selon l'une quelconque des revendications 1 à 5, **caractérisé en ce que** la partie transmettant la lumière (62B) se trouve dans une partie formant ouverture formée dans le panneau avant (620).

7. Tracteur selon l'une quelconque des revendications 1 à 5, **caractérisé en ce que** la partie transmettant la lumière (62B) est une plaque transparente montée dans le panneau avant (620).

8. Tracteur selon l'une quelconque des revendications 1 à 7, **caractérisé en ce qu'**un panneau grillagé avant (62A) ayant une constitution de treillis est disposé dans le panneau avant (620).
